# EUROPEAN PATENT APPLICATION

(11) **EP 4 375 829 A1**
(43) Date of publication of application: **29.05.2024**
(21) Application number: 22306730.7
(22) Date of filing: 24.11.2022
(51) Int. Cl.: G06F 3/16

(54) **METHOD AND APPARATUS OF GENERATING HAPTIC EFFECT FROM AUDIO CONTENT**

(71) Applicant: Go Touch VR, 59000 Lille (FR)
(72) Inventor: VEZZOLI, Eric, 75016 PARIS (FR); RABU, Titouan, 59000 LILLE (FR)
(74) Representative: RVDB

(57) **Abstract**

There is provided methods and apparatus of generating (23) a haptic effect from an audio signal (201). To reach that aim, classification information representative of a type of an audio content associated with the audio signal (201) is obtained. Detection parameters (221) are selected according to the classification information. One or more components of the audio signal (201) are detected (22) according to the detection parameters (221). One or more characteristics (212) representative of the detected components are determined. The haptic effect (233) is generated according to the characteristics (212).

## Description

### FIELD

The present application generally relates to the field of haptic and, in particular, to the generating of haptic data representative of a haptic effect to be rendered by a haptic device. The present application also relates to method and apparatus of processing data representative of an audio content to generate data representative of one or more haptic effects.

### BACKGROUND

The present section is intended to introduce the reader to various aspects of art, which may be related to various aspects of at least one exemplary embodiments of the present application that is described and/or claimed below. This discussion is believed to be helpful in providing the reader with background information to facilitate a better understanding of the various aspects of the present application.

Haptic technology broadly refers to any technology recreating the sense of touch in a user interface by applying force, vibration, motion and other feelings such as temperature, to provide information to an end user, for example in addition to visual and audio information when rendering multimedia contents.

Haptic feedback covers a wide range of possible stimulation embodiments but is mainly divided into tactile haptic technology and kinesthetic haptic technology: tactile haptic feedback (or tactile haptic effect) refers to sensations such as vibration, friction, or micro-deformation while kinesthetic haptic feedback (or kinesthetic haptic effect) refers to sensations that provide force sensations that can stimulate both mechanical stimuli as well as stimuli related to the position and the movement of the body.

The rendering of haptic feedback or haptic effect is obtained using haptic device (also called haptic rendering device), a haptic device corresponding to an arrangement of one or more haptic actuators. For example, vibrotactile effects might be obtained with the use of haptic devices such as ERMs (Eccentric Rotating Mass), LRAs (Linear Resonant Actuators), and large bandwidth actuators like VCM (Voice Coil Motors), or PZT (Piezoelectric Actuators). Kinesthetic effects might be rendered with actuators exercising a force impeding a limb movement, such effects being merely felt on the muscles and tendons than on the skin. Other examples of haptic devices comprise resistive force feedback devices, active force feedback devices and skin indentation devices.

While there is a large range of haptic devices enabling to experience haptic effects, contents, e.g., audio and/or video content, comprising haptic effects to be rendered are quite limited. The lack of haptic content limits the interest in haptic devices and limits user experience while consuming the contents.

### SUMMARY

The following section presents a simplified summary of at least one exemplary embodiment in order to provide a basic understanding of some aspects of the present application. This summary is not an extensive overview of an exemplary embodiment. It is not intended to identify key or critical elements of an embodiment. The following summary merely presents some aspects of at least one of the exemplary embodiments in a simplified form as a prelude to the more detailed description provided elsewhere in the document.

According to a first aspect of the present application, there is provided a method of generating a haptic effect, the method comprising:
- obtaining classification information representative of a type of an audio content associated with an audio signal;
- selecting a set of detection parameters among a plurality of sets of detection parameters according to the classification information;
- detecting at least a component of the audio signal according to the selected set of detection parameters;
- determining at least a characteristic representative of the at least a component; and
- generating the haptic effect according to the at least a characteristic.

In an exemplary embodiment, the method further comprises obtaining a set of user-preference parameters representative of preference of a user, the haptic effect being further generated according to the set of user-preference parameters.

In an exemplary embodiment, the method further comprises:
- receiving mode information representative of a rendering mode for rendering the haptic effect;
- selecting the set of user-preference parameters among a plurality of sets of user-preference parameters according to the mode information.

In a further exemplary embodiment, values of the detection parameters of the selected set are according to the set of user-preference parameters.

In another exemplary embodiment, the at least a component belongs to a set of components comprising:
- a component corresponding to a transient in a temporal representation of the audio signal; and
- a component corresponding to a frequency sub-band of a frequency band associated with a frequency representation of the audio signal.

In a further exemplary embodiment, the frequency representation is obtained by applying a Fast Fourier Transform to the temporal representation of the audio signal.

In an additional exemplary embodiment, the set of detection parameters comprises at least a parameter belonging to a set of parameters comprising:
- a parameter representative of a determined amplitude;
- a parameter representative of a time window;
- parameters representative of bounds of a frequency interval;
- a parameter representative of a frequency threshold; and
- a parameter representative of a spectral power threshold

In another exemplary embodiment, the at least a characteristic belongs to a set of characteristics comprising:
- a characteristic representative of an amplitude value;
- a characteristic representative of a frequency value;
- a characteristic representative of an amplitude power difference between 2 power spectral density representations of the audio signal.

In an exemplary embodiment, the method further comprises obtaining actuator information representative of a type of haptic actuator targeted to render the haptic effect, the haptic effect being further generated according to the actuator information.

According to a second aspect of the present application, there is provided an apparatus of generating a haptic effect, wherein the apparatus comprises a memory associated with at least a processor configured to implement the method in accordance with the first aspect of the present application.

According to a third aspect of the present application, there is provided a computer program product including instructions which, when the program is executed by one or more processors, causes the one or more processors to carry out a method according to the first aspect of the present application.

According to a fourth aspect of the present application, there is provided a non-transitory storage medium carrying instructions of program code for executing a method according to the first aspect of the present application.

The specific nature of at least one of the exemplary embodiments as well as other objects, advantages, features and uses of said at least one of exemplary embodiments will become evident from the following description of examples taken in conjunction with the accompanying drawings.

### BRIEF DESCRIPTION OF THE DRAWINGS

Reference will now be made, by way of example, to the accompanying drawings which show exemplary embodiments of the present application, and in which:
**Figure 1** shows a schematic representation of a communication network for communicating audio content, in accordance with at least one exemplary embodiment;
**Figure 2** shows an example of a generation scheme of haptic effect from a signal representative of the audio content of figure 1, in accordance with at least one exemplary embodiment;
**Figure 3** shows an example of a detection scheme of specific components within a signal representative of the audio of figure 1, in accordance with at least one exemplary embodiment;
**Figure 4** shows a schematic block diagram of step(s) of a method of generating a haptic effect from the audio content of figure 1, in accordance with at least one exemplary embodiment;
**Figure 5** illustrates a schematic block diagram of an example of a system in which various aspects and exemplary embodiments are implemented.

Similar reference numerals may have been used in different figures to denote similar components.

### DESCRIPTION OF EXEMPLARY EMBODIMENTS

At least one of the exemplary embodiments is described more fully hereinafter with reference to the accompanying figures, in which examples of at least one of the exemplary embodiments are illustrated. An exemplary embodiment may, however, be embodied in many alternate forms and should not be construed as limited to the examples set forth herein. Accordingly, it should be understood that there is no intent to limit exemplary embodiments to the particular forms disclosed. On the contrary, the disclosure is intended to cover all modifications, equivalents, and alternatives falling within the spirit and scope of the present application.

Exemplary embodiments described hereinafter may be combined with each other or each of the exemplary embodiment may be individually implemented, e.g., as an alternative embodiment.

At least one of the aspects generally relates to a method and apparatus of generating haptic data representative of one or more haptic effects from audio data representative of an audio signal of an audio content. The haptic data may be transmitted to a haptic device having haptic rendering capabilities. The haptic device may further be configured to render the audio content from the audio signal describing the audio content.

The haptic device comprises for example one or more haptic actuators, e.g., LRA(s) and/or VCM(s).

The haptic data is obtained by processing the audio data according to a set of detection parameters. The set of detection parameters is determined, for example selected in a plurality of sets of detection parameters, according to a classification information representative of a type of the audio content. Such a classification information is for example received with the audio data or determining by processing the audio data. Such a processing comprises for example classifying the audio data with machine learning method.

Processing the audio data comprises for example detecting one or more components of the audio signal (e.g., transient(s) and/or specific frequency component) and extracting from the audio signal parameters or characteristics representative of each of the one or more components.

Such a processing enables to generate haptic data from features of an audio data that are detected or determined according to a set of detection parameters, which is specifically adapted to the type of the audio signal. It enables to obtain one or more haptic effects to be rendered with the audio content, the one or more haptic effects being correlated and consistent with the audio content

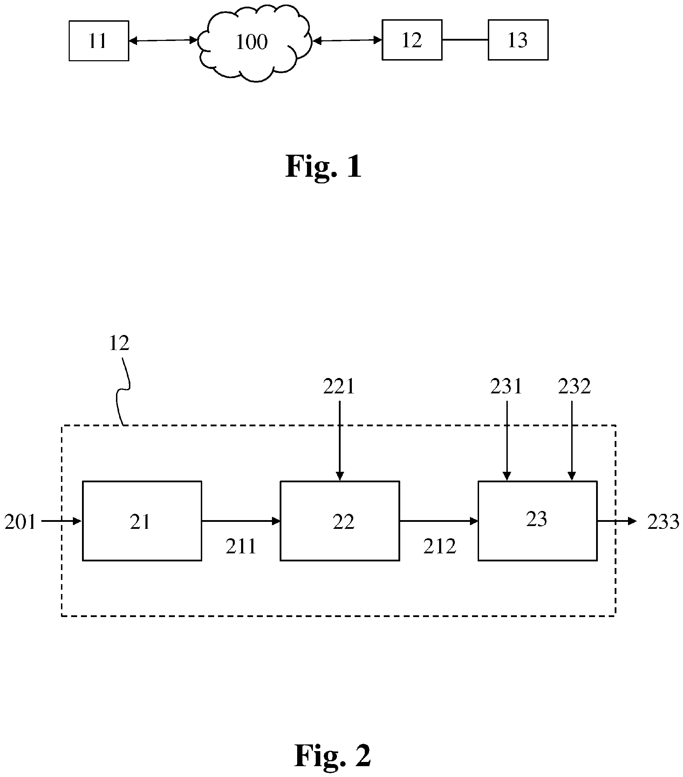

**Figure 1** illustrates a schematic representation of a communication network 100 for communicating audio content in accordance with at least one exemplary embodiment.

The network 100 corresponds for example to a WAN (Wide Area Network), LAN (Local Area Network) or WLAN (Wireless Local Area Network) network or a combination of one or more of these networks. According to other examples, the network 100 corresponds to a radio broadcasting network, a television broadcasting network, a cellular network or a satellite network, or any combination thereof.

The network 100 enables the transmission of audio content from a first device 11 (e.g., a transmitter and/or encoder) to a second device 12 (e.g., a receiver and/or decoder).

The audio content that is transmitted from the first device 11 to the second device 12 may be of any form. For example, the audio content may be transmitted as an analog audio signal or as a digital audio signal. In the following, the expression "audio signal" will be used to represent the signal transporting the data representative of the audio content.

Once received by the second device, the audio signal may be converted from analog to digital or inversely to digital or analog, as it will be recognized by the skilled person in the art.

The audio signal may be represented in time space and/or in frequency space. The audio signal may be converted from a time space representation to a frequency space representation, e.g., using FFT (Fast-Fourier Transform) or inversely from a frequency space representation to a time space representation, e.g., using an inverse FFT, as it will be recognized by the skilled person in the art.

The audio signal is for example represented with a series of samples. A sample in a time space representation is represented with a value of amplitude associated with a time. A sample in a time space representation is represented with data representative of amplitude associated with a frequency (or a frequency range). The audio signal represented with a series of samples results for example from a sampling process at a determined sampling rate or frequency (e.g., 44100 Hz).

According to a specific embodiment, the audio signal may be associated with a video signal corresponding to a video content. For example, the audio signal may correspond to the audio content of a movie, of a video game, of VR (Virtual Reality) content.

The second device 12 is configured to process the received audio signal, notably for generating data representative of one or more haptic effects from the audio signal (or a part of the received audio signal). Processing performed by the second device 12 may for example comprise analog/digital converting, frequency filtering (e.g., low-pass filtering, band-pass filtering), temporal filtering (e.g., selecting a time window), downsampling, transforming form time space to frequency space, transforming from frequency space to time space, etc.

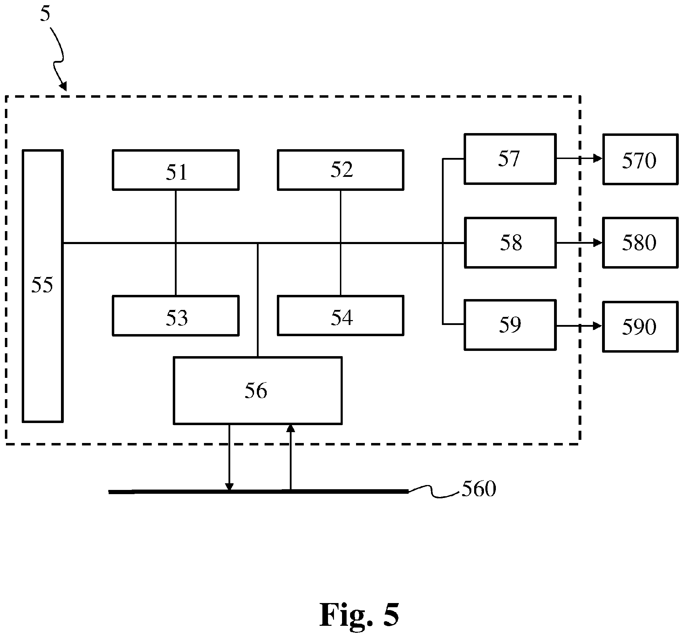

Exemplary embodiments of the first and/or second devices 11, 12 are described hereinafter with regard to figure 5.

The second device 12 is communicatively coupled to a third device 13 that corresponds to a haptic device. According to a specific and non-limiting example, the third device 13 is also configured to render the audio content, the third device corresponding for example to a headset, XR headset or headphones. According to another specific and non-limiting example, the third device 13 is configured to render only haptic effect(s) (and no audio content), the third device 13 corresponding for example to a haptic vest, a haptic chair, a palm rest, a mouse, etc.

**Figure 2** illustrates a schematic representation of a generation scheme of one or more haptic effects from an audio signal 201 in accordance with at least one exemplary embodiment.

The following embodiment(s) will be described with reference to an audio signal 201 received in input of the second device 12 corresponding to a digital audio signal represented in a time space. Naturally, the present principles do not limit to such an example but extends to any audio signal.

The audio signal 201 corresponds to the audio signal transmitted by the first device 11 or to only a part of it. A part of the audio signal may correspond to the part associated with a determined frequency band, the audio signal transmitted by the first device being transmitted in a frequency spectrum larger than the frequency spectrum corresponding to the determined frequency band.

Blocks 21 to 23 represents indifferently operations/steps of a process/method and processing units implementing such operations/steps of the process/method. The processing units 21 to 23 may be implemented as a single element or as separate elements as a combination of hardware and software as known to those skilled in the art.

According to a specific and non-limiting example, the data representative of the audio signal 201 comprises an information or a flag representative of the presence or absence of haptic data representative of a haptic effect to be rendered in said data. Such an information corresponds for example to a specific bit in a header, value '0' of the bit signaling that the data of the audio signal 201 do not comprise any haptic data and value '1' of the bit signaling that the data of the audio comprises or encompasses haptic data describing the haptic effect(s) to be rendered. According to this example, operations 21 to 23 are only performed when the information is representative of absence of haptic data (e.g., bit with value '1').

According to a further specific and non-limiting example, classification information representative of a type of the audio content is associated with the audio signal. The classification information is for example comprised in the data representative of the audio signal 201 or received as metadata with the data representative of the audio signal 201 (e.g., in a channel different from the channel of the audio signal 201).

Classification information is associated with the audio signal on a time scale, i.e., classification information may vary over time as the type of the audio content may vary over time. A classification information may for example be associated with each time segment of the audio segment, the temporal duration of each time segment being fixed or varying to adjust to the audio content and types of audio/noise comprised in the audio content.

Classification information corresponds for example to an identification value coded on 4 or 8 bits for example. The type of the audio content identified with the classification information belongs for example to a determined list of different types comprising for example: voice, music, silence, explosion, dialogue, firearm noise, etc.

Sub-types may be identified within a type, for example for the type 'music', sub-types may comprise for example: classical, pop, rock, electro, jazz, metal, hard rock, etc.

The classification information is for example obtained with a semantic recognition method as known to those skilled in the art. Such a method may be applied to the audio content itself but also to video content associated with the audio content if applicable, video content providing additional information to identify the type of the audio content (for example the recognition of people talking to each other provides information to identify the type 'dialogue' or 'speech' or 'voice').

Classification information is for example obtained by implementing machine learning method, deep learning method, Artificial Intelligence, for example via neurol networks, as known to those skilled in the art. Examples of audio classification method are described in "Audio Classification Method Based on Machine Learning", by Feng Rong et al, published in IEEE, 21 September 2017, DOI: 10.1109/ICITBS.2019.98 or in "Comparative Analysis of Machine Learning Algorithms for Audio Signals Classification", by Poonam Mahana and Gurbhej Singh, in IJCSNS International Journal of Computer Science and Network Security, VOL. 15 No. 6, June 2015.

The processing of the audio content (and potentially of the video content associated with the audio content) is for example implemented by the first device 11, the classification information being added to the stream of data transmitted to the second device 12.

According to a variant, when no classification information is received with the audio signal 201 by the second device 12, the determining of the classification information is performed by the second device 12 or by another device communicatively coupled to the second device 12.

In an operation 21, one or more processing is applied to the data representative of the audio signal 201. The one or more processing comprises for example:
- down sampling, for example from a sampling rate of 44 100 Hz to a sampling rate of 2 400, 4 800 or 8 000 Hz; and/or
- converting the audio signal 201 from time domain to frequency domain, for example by using Fourier Transform or Fast Fourier Transform; and/or
- low pass filtering for passing the part of the audio signal 201 with a frequency lower than a determined cutoff frequency (or frequency cut); and/or
- band pass filtering for passing the part of the audio signal 201, which is within a determined range of frequencies; and/or
- buffering the data with a FIFO (First In, First Out) buffer; and/or
- determining of the classification information when no classification information is received with the audio signal 201 from the first device 11 by the second device 12.

In an operation 22, data 211 resulting from the processing performed in operation 21 is further processed.

A set of parameters 221 is determined according to the classification information. The set of parameters 221 is for example selected in a list or group of sets of parameters according to the classification information, i.e., according to the type of the audio content.

The sets of detection parameters are for example stored in a remote storage device communicatively coupled to the second device 12, a mapping between each set and corresponding type of audio content being associated with the list, the mapping information being for example registered in a LUT (Look-Up Table). The sets of detection parameters with the LUT, if applicable, are for example stored in a memory of the device performing the semantic recognition method or any other method to determine the classification information.

According to this example, the set of detection parameters that is selected according to the classification information is received by the second device 12 with the audio content, for example in a channel separate from the channel transporting the data representative of the audio content.

According to another example, the sets of detection parameters are for example stored in a memory of the second device 12, with the mapping information registered in the LUT establishing relationship between each set and corresponding type of audio content being associated with the list.

Each set of detection parameters comprises for example one or several detection parameters, the type and/or value associated with each detection parameters depending on the type of audio content identified with the classification information. Identical detection parameter(s) may belong to several sets of detection parameters of the list.

The data 211 is advantageously processed to detect one or more specific components of the audio signal represented with the data 211 based on the detection parameters selected according to the classification information.

The one or more components that is/are detected or determined within the audio signal using the detection parameters correspond for example to:
- one or more transients, a transient being represented with a sudden change or variation in the audio signal, a transient corresponding for example to a part of the audio signal with an abrupt change in the amplitude (e.g., an amplitude peak or a series of amplitude peaks); and/or
- one or more frequency components/parts of the audio signal each corresponding to a frequency sub-band of the frequency band associated with the audio signal (e.g., a part of the audio signal with frequencies lower than a determined frequency cutoff or with frequencies belonging to a determined interval or band of frequencies).

Transient(s) may be detected in a time representation or frequency representation of the audio signal while frequency component(s) may be detected in the frequency representation (frequency domain) of the audio signal.

The one or more detection parameters used to detect the one or more components corresponds for example to one or more of the following parameters:
- a parameter representative of a determined amplitude; and/or
- a parameter representative of a time window, i.e., a temporal segment having a determined duration; and/or
- parameters representative of bounds of a frequency interval, i.e., the lower and upper bounds of the frequency interval; and/or
- a parameter representative of a frequency threshold, i.e., a determined frequency value, also called frequency cut or frequency cutoff; and/or
- a parameter representative of a spectral power threshold.

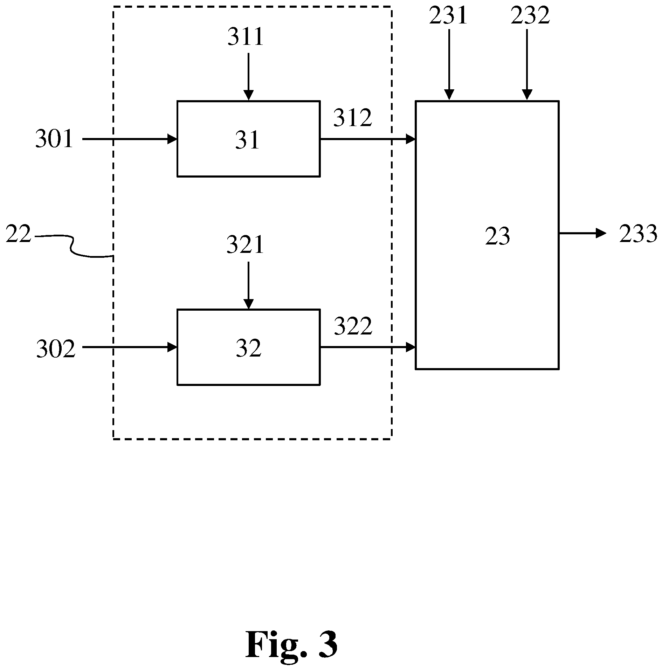

Exemplary methods to detect or determine the one or more components from the audio signal and detection parameters 221 will be described hereinafter with regard to figure 3.

One or more characteristics 212 representative of each of the detected component(s) is or are determined and transmitted to unit 23 for synthesizing the haptic effect(s).

The type of characteristic advantageously depends on the component it represents.

For example, when the detected component corresponds to a transient, the characteristic(s) 212 may correspond to one or more of the following characteristics or parameters:
- a parameter representative of an amplitude, for example a maximum amplitude value detected in a determined time window; and/or
- a parameter representative of the difference between 2 amplitude spectral densities.

When the detected component corresponds to a frequency component, the characteristic(s) 212 may correspond to one or more of the following characteristics or parameters:
- a parameter representative of a frequency, for example a maximum frequency value associated with a frequency representation of a signal (e.g., the envelope of at least a part of the audio signal) and/or a maximum frequency value in a range of frequencies; and/or
- parameters representative of the detected frequency component, e.g., parameters representative of samples of a frequency sub-part of the audio signal, the parameters corresponding for example to coefficient of a Fourier Transform or of a Fast Fourier Transform.

In an operation 23, data 233 representative of one or more haptic effects is determined, generated or synthesized according to the characteristics 212 received from the unit 22.

The one or more haptic effects is for example generated by feeding one or more haptic effect synthesizing models (or rules) with the one or more characteristics 212.

According to a specific embodiment, values of the one or more parameters of the haptic effect synthesizing model used to generate the data representative of the haptic effect depend on parameters 231 representative of user-preference, i.e., the preference of the user consuming the audio content and experiencing the haptic effect.

User-preference parameters are for example received from the haptic device 13 that is communicatively coupled or connected with the second device 12, e.g., via wired connection (e.g., USB) or via wireless connection (e.g., Bluetooth^{®} or Wifi^{®}). To reach that aim, the haptic device 13 comprises for example an HMI (Human-Machine Interface) configured to set one or more parameters. Such an HMI comprises for example one or more buttons and/or adjustment wheel(s).

According to another example, the user-preference parameters are set via an HMI associated with the second device 12, for example implemented by the second device 12. The HMI corresponds for example to a graphical HMI displayed on a display screen coupled with the second device 12 or comprised in the second device 12. The user-preference parameters are for example input using peripherals like a keyboard and/or a mouse or using a touch interface associated with the display screen.

The user may for example set the value of each parameter of at least a part of the parameters used by the haptic effect synthesizing model implemented to generate the haptic effect via the HMI.

According to another example, the user may select a rendering mode among a plurality of rendering modes, values assigned to the parameters of the model varying from a rendering mode to another one for example, via an HMI associated with the haptic device 13 and/or with the second device 12.

Example of rendering modes are:
- Default mode, which corresponds to a balanced mode to enhance the listening of the audio content with the rendering of smooth haptic effects to increase the feeling of immersion for example;
- Entertainment mode, which is for example designed for beat driven music and/or action filled entertainment content: haptic effects may be used to enhance the role of basses and beats to increase the sense of presence of dynamic music and sounds effects;
- Gaming mode, which is for example designed for gaming sound effects.

When a rendering mode is selected, the second device 12 receives for example an information representative of the rendering mode that has been selected. The second device 12 uses this information to retrieve from a memory the values of the parameters associated with the rendering mode to synthesize the haptic effect(s).

According to another example, the second device 12 receives directly, for example from the haptic device 13, the values associated with the selected rendering mode.

According to a variant, values of one or more of the detection parameters used to detect one or more components in the audio signal 201 are according to the user-preference parameters. For example, threshold value(s) used to detect specificities within the audio signal is/are adjusted according to the user-preference parameters.

According to another specific embodiment, actuator information 232 representative of a type of haptic actuator targeted to render the haptic effect is received or obtained by the second device 12, for example by unit 23. The actuator information is advantageously used by unit 23 to generate the haptic effect(s) according to this actuator information.

The actuator information is for example received by the haptic device 13. The actuator information comprises for example data representative of haptic rendering capabilities of the haptic device 13, such as for example:
- data representative of a number of haptic actuators comprised in the haptic device 13; and/or
- data representative of a spatial distribution of the haptic actuator(s) of the haptic device 13; and/or
- data representative of the type of actuator and/or of the type of the haptic device 13 (e.g., LRA, VCM, ERM, PZT).

The actuator information 232 (as well as the user-preference parameters 231 when received from the haptic device 13) is for example received automatically from the haptic device 13, when connecting the haptic device 13 to the second device 12, e.g., via USB.

When connecting the haptic device 13 to the second device 12, the haptic device 13 may automatically initiate a process for transmitting the actuator information 232 through dedicated API(s) (Application Program Interface(s)). This process corresponds for example to a so-called "plug and play" (PnP) process, the haptic device 13 and the second device 12 corresponding to PnP devices.

According to another example, the actuator information 232 is obtained or retrieved from a memory of the second device or from a remote system, for example upon reception of an identifier identifying the haptic device 13, said identifier being for example automatically transmitted by the haptic device 13 to the second device 12 or transmitted by the haptic device 13 after transmission of a request by the second device 12.

**Figure 3** illustrates a schematic representation of the detection of one or more components in the audio signal 201 in accordance with at least one exemplary embodiment.

Figure 3 illustrates operations/steps of one or more exemplary process/methods implemented in unit 22. Such operations/steps may for example be implemented in one or more processing units 31, 32. Processing units 31 and 32 may be implemented as a single element or as separate elements, as a combination of hardware and software as known to those skilled in the art.

The processing unit 31 represents advantageously a first part of the processing performed by the processing unit 22 to detect one or more transients in the audio signal, if any.

The processing unit 32 represents advantageously a second part of the processing performed by the processing unit 22 to detect one or more frequency sub-parts in the audio signal, if any.

The detection of the one or more transients is based on input data 301, which is representative of the audio signal 201. The input data 301 corresponds for example to the data of the audio signal 201 itself or to data of the audio signal having been processed (e.g., down sampling, buffering).

The detection of the one or more frequency sub-parts is based on input data 302, which is representative of the audio signal 201. The input data 302 corresponds for example to the data of the audio signal 201 itself or to data of the audio signal having been processed (e.g., time-frequency converting, low pass filtering, band pass filtering, down sampling, buffering).

Input data 301 and 302 may be the same or different, i.e., different processing, if any, may be applied to the audio signal 201 to obtain the input data 301 and 302.

According to a first exemplary embodiment, an envelope of the audio signal 201 is obtained, e.g., extracted, from the data representative of the audio signal, for example from the representation of the audio signal in time domain.

The envelope is obtained through any method as known to those skilled in the art. Such method is for example described in the document "Improved estimation of the amplitude envelope of time-domain signals using true envelope cepstral smoothing", by Marcelo Caetano and Xavier Rodet, published in IEEE International Conference on Acoustics, Speech and Signal Processing, May 2011 (HAL Id: hal-00604385), or in the document "A heuristic approach to obtain signal envelope with a simple software implementation", by Cecilia Gisele Jarne, published in Anales AFA, July 2018.

### Detection of transient(s)

The detection of each transient is based on the rate of change of the envelope of the audio signal. For example, a function representative of the rate of change is obtained by deriving the function representative of the envelope.

A transient is for example detected each time the derivative of the envelope is greater than a determined threshold value, the determined threshold value corresponding to one detection parameter 311.

According to a variant, the detection of a transient is according to another detection parameter 311 corresponding to a time window. According to this variant, the audio signal 201 is segmented in time segments having each a duration corresponding to the time window parameter, at most one transient being sought in each time segment by comparing the derivative of the audio signal associated with said time segment with the determined threshold parameter 311.

Characteristics 312 representing a detected transient correspond to an amplitude value and a time, which correspond to the amplitude of the audio signal and corresponding time associated with the derivative at the point where the derivative is greater than the determined threshold value.

### Detection of frequency component(s) / sub-part(s)

The detection of a frequency component / sub-part of the audio signal 201 is for example obtained using the time window as detection parameter 321.

For example, in each time segment of the envelope of the audio signal having a duration equal to the time window 321, a first characteristic 322 is obtained corresponding to the maximum of the amplitude of the envelope for said each time segment.

A frequency-domain representation of each time segment of the envelope is obtained, for example via FFT, and a second characteristic 322 is obtained corresponding for example to the highest frequency (maximum frequency within the time segment). According to another example, a band-pass filtering is performed on the frequency-domain representation of the time segment and the second characteristic 322 that is extracted corresponds to the highest frequency (maximum frequency) within the band-pass filtered signal.

### Haptic effect generation / synthesizing

When a transient is detected, a haptic effect associated / correlated with this transient is generated based on the characteristic(s) 312 received by unit 23.

For example, data representative of the haptic effect associated with the transient is generated, said data comprising an amplitude value of the haptic effect that is determined from the amplitude value obtained from unit 31.

The amplitude value of the haptic effect is for example determined by applying a weighting factor or coefficient to the received amplitude value 312, the value of the weighting factor being for example according to the user-preference parameters 231.

The haptic effect representative of the transient is for example synchronized with the audio content by using the characteristic 312 representative of time.

The haptic effect associated with the transient corresponds for example to a peak having as amplitude the amplitude obtained as function of the amplitude corresponding to the characteristic obtained from the detected transient. The duration of the haptic effect is for example set from a time parameter comprised in the user-preference parameters 231.

When a frequency component is detected, a haptic effect associated / correlated with this frequency component is generated based on the characteristic(s) 322 received by unit 23.

For example, the haptic effect may be represented with a sine function, with frequency corresponding to the frequency characteristic 322 obtained from unit 32 and the amplitude of the signal corresponds to the amplitude characteristic 322 obtained from unit 32, a weighting factor or coefficient (for example depending on the user-preference parameters 231) being for example applied to the amplitude characteristic 322 to obtain the amplitude of the haptic effect.

Different functions may be used to generate the haptic effect(s) (for transient and/or frequency component), the function used to generate the signal representative of the haptic effect being for example according to the type of the haptic device 13 and/or to the haptic rendering capabilities of the actuator(s) comprised in the haptic device 13.

For example, if the haptic device 13 comprises one or more voice coils, a first function may be used to generate the haptic effect corresponding to a transient from characteristic(s) 312 and a second function may be used to generate the haptic effect corresponding to a frequency component from characteristic(s) 322. If the haptic device 13 comprises one or more LRA(s), a third function may be used to generate the haptic effect corresponding to a transient from characteristic(s) 312 and a fourth function may be used to generate the haptic effect corresponding to a frequency component from characteristic(s) 322. According to this example, the first, second, third and fourth functions are different.

According to a second exemplary embodiment, the data or signal representative of the haptic effects is obtained by applying low pass filtering to the audio signal 201.

### Detection of frequency component(s) / sub-part(s)

A first low pass filter is applied to the audio signal 201 with a first frequency cut (for example equal to 400 or 450 Hz) that corresponds to a detection parameter 321 and/or 322.

The first low passed signal obtained from the first low pass filtering is for example used by unit 23 as driving signal for obtaining or generating the haptic effect. Characteristics 322 transmitted by unit 32 to unit 23 correspond for example to parameters representative of a set of samples representative of the first low passed signal.

### Detection of transient(s)

A second low pass filter is applied to the audio signal 201 with a second frequency cut that is higher than the first frequency cut (for example equal to 450, 550 or 600 Hz), the second frequency cut also corresponding to a detection parameter 321 and/or 322.

Power spectrum, noted PSD (Power Spectral Density), is determined for the first low passed signal (PSD1) and for the second low passed signal (PSD2) obtained from the second low pass filtering, as known to those skilled in the art.

A transient is for example detected when the difference between PSD2 and PSD1 is greater or above than a determined threshold value, noted 'T' (that is received as detection parameter 321 and/or 322), i.e., when PSD2 - PSD1 > T.

The characteristic 312 obtained from the detected transient corresponds for example to the amplitude power difference associated with the detection of 'PSD2 - PSD1 > T'.

The above operations may for example be reiterated for each time segment of the audio signal 201, the duration of which being indicated or signaled by a detection parameter.

According to a variant, RMS (Root Mean Square) is used instead of PSD.

### Haptic effect generation / synthesizing

When a frequency component is detected, the data representative of the first low passed signal is used by unit 23 as driving signal for synthesizing the corresponding haptic effect.

When a transient is detected, a corresponding haptic effect is generated or synthesized using the amplitude power difference to determine the amplitude of the haptic effect, for example by applying a weighting factor or coefficient to the received amplitude power difference, the value of the weighting factor being for example according to the user-preference parameters 231.

As for the first exemplary embodiment, different functions may be used to generate the haptic effect(s) (for transient and/or frequency component), the function used to generate the signal representative of the haptic effect being for example according to the type of the haptic device 13 and/or to the haptic rendering capabilities of the actuator(s) comprised in the haptic device 13.

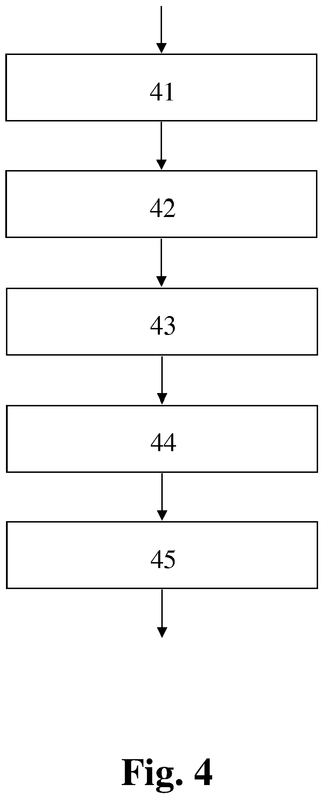

**Figure 4** shows a schematic block diagram of steps of a method of generating one or more haptic effects from an audio content, in accordance with at least one exemplary embodiment.

In a first step 41, classification information representative of a type of the audio content associated with an audio signal is obtained, for example received from a remote device or system or retrieved from a memory.

In a second step 42, a set of detection parameters is selected among a plurality of sets of detection parameters according to the classification information obtained in first step 41.

In a third step 43, at least a component of the audio signal is detected according to the set of detection parameters selected in second step 42.

In a fourth step 44, at least a characteristic representative of the at least a component detected in third step 43 is determined or obtained from the at least a component.

In a fifth step 45, the one or more haptic effects is / are generated according to the at least a characteristic determined in fourth step 44.

**Figure** 5 shows a schematic block diagram illustrating an example of a system 5 in which various aspects and exemplary embodiments are implemented.

System 5 may be embedded as one or more devices including the various components described below. In various embodiments, the system 5 may be configured to implement one or more of the aspects described in the present application.

Examples of equipment that may form all or part of the system 5 include personal computers, laptops, smartphones, tablet computers, digital multimedia set top boxes and their associated processing systems, head mounted display devices (HMD, see-through glasses), haptic sensors or actuators, "caves" (system including multiple displays), servers, haptic encoders, haptic decoders, post-processors processing output from a haptic decoder, pre-processors providing input to a haptic encoder, web servers, set-top boxes, wireless (e.g., Bluetooth^{®}) connected wearable haptic devices, game controller, mouse, mousepad, keyboard, palm rest, chairs, desk, XR headset, headphones, bracelet, head and/or lumbar support device or chair, any other device for processing haptic data or haptic signals, or other communication devices. Elements of system 5, singly or in combination, may be embodied in a single integrated circuit (IC), multiple ICs, and/or discrete components. For example, in at least one embodiment, the processing and encoder/decoder elements of system 5 may be distributed across multiple ICs and/or discrete components. In various embodiments, the system 5 may be communicatively coupled to other similar systems, or to other electronic devices, via, for example, a communications bus or through dedicated input and/or output ports.

The system 5 may include at least one processor 51 configured to execute instructions loaded therein for implementing, for example, the various aspects described in the present application. Processor 51 may include embedded memory, input output interface, and various other circuitries as known in the art. The system 5 may include at least one memory 52 (for example a volatile memory device and/or a non-volatile memory device). System 5 may include a storage device 54, which may include non-volatile memory and/or volatile memory, including, but not limited to, Electrically Erasable Programmable Read-Only Memory (EEPROM), Read-Only Memory (ROM), Programmable Read-Only Memory (PROM), Random Access Memory (RAM), Dynamic Random-Access Memory (DRAM), Static Random-Access Memory (SRAM), flash, magnetic disk drive, and/or optical disk drive. The storage device 54 may include an internal storage device, an attached storage device, and/or a network accessible storage device, as non-limiting examples.

The system 5 may include an encoder/decoder module 53 configured, for example, to process data to provide encoded/decoded haptic signal or data, and the encoder/decoder module 53 may include its own processor and memory. The encoder/decoder module 53 may represent module(s) that may be included in a device to perform the encoding and/or decoding functions. As is known, a device may include one or both of the encoding and decoding modules. Additionally, encoder/decoder module 53 may be implemented as a separate element of system 53 or may be incorporated within processor 51 as a combination of hardware and software as known to those skilled in the art.

Program code to be loaded onto processor 51 or encoder/decoder 53 to perform the various aspects described in the present application may be stored in storage device 54 and subsequently loaded onto memory 52 for execution by processor 51. In accordance with various embodiments, one or more of processor 51, memory 52, storage device 54, and encoder/decoder module 53 may store one or more of various items during the performance of the processes described in the present application. Such stored items may include, but are not limited to, data representative of audio content, data representative of video content, haptic-related data, a bitstream, matrices, variables, and intermediate or final results from the processing of equations, formulas, operations, and operational logic.

In several embodiments, memory inside of the processor 51 and/or the encoder/decoder module 53 may be used to store instructions and to provide working memory for processing that may be performed during data processing, encoding or decoding.

In other embodiments, however, a memory external to the processing device (for example, the processing device may be the processor) may be used for one or more of these functions. The external memory may be the memory 52 and/or the storage device 54, for example, a dynamic volatile memory and/or a non-volatile flash memory. In at least one embodiment, a fast external dynamic volatile memory such as a RAM may be used as working memory for data processing.

The input to the elements of system 5 may be provided through various input devices as indicated in block 55. Such input devices include, but are not limited to, (i) an RF portion that may receive an RF signal transmitted, for example, over the air by a broadcaster, (ii) a Composite input terminal, (iii) a USB input terminal, (iv) a phone connector (also known as phone jack, audio jack, headphone jack or jack plug) input terminal and/or (v) an HDMI input terminal.

In various embodiments, the input devices of block 55 may have associated respective input processing elements as known in the art. For example, the RF portion may be associated with elements necessary for (i) selecting a desired frequency (also referred to as selecting a signal, or band-limiting a signal to a band of frequencies), (ii) down-converting the selected signal, (iii) band-limiting again to a narrower band of frequencies to select (for example) a signal frequency band which may be referred to as a channel in certain embodiments, (iv) demodulating the down-converted and band-limited signal, (v) performing error correction, and (vi) demultiplexing to select the desired stream of data packets. The RF portion of various embodiments may include one or more elements to perform these functions, for example, frequency selectors, signal selectors, band-limiters, channel selectors, filters, downconverters, demodulators, error correctors, and de-multiplexers. The RF portion may include a tuner that performs various of these functions, including, for example, down-converting the received signal to a lower frequency (for example, an intermediate frequency or a near-baseband frequency) or to baseband.

In one set-top box embodiment, the RF portion and its associated input processing element may receive an RF signal transmitted over a wired (for example, cable) medium. Then, the RF portion may perform frequency selection by filtering, down-converting, and filtering again to a desired frequency band.

Various embodiments rearrange the order of the above-described (and other) elements, remove some of these elements, and/or add other elements performing similar or different functions.

Adding elements may include inserting elements in between existing elements, such as, for example, inserting amplifiers and an analog-to-digital converter. In various embodiments, the RF portion may include an antenna.

Additionally, the USB and/or HDMI terminals may include respective interface processors for connecting system 5 to other electronic devices across USB and/or HDMI connections. It is to be understood that various aspects of input processing, for example, analog to digital conversion, time domain to frequency domain conversion, down sampling, band pass or low pass filtering, Reed-Solomon error correction, may be implemented, for example, within a separate input processing IC or within processor 51 as necessary. Similarly, aspects of USB or HDMI interface processing may be implemented within separate interface ICs or within processor 51 as necessary. The processed stream may be provided to various processing elements, including, for example, processor 51, and encoder/decoder 53 operating in combination with the memory and storage elements to process the data stream as necessary for presentation on an output device.

Various elements of system 5 may be provided within an integrated housing. Within the integrated housing, the various elements may be interconnected and transmit data therebetween using suitable connection arrangement 55, for example, an internal bus as known in the art, including the I2C bus, wiring, and printed circuit boards.

The system 5 may include communication interface 56 that enables communication with other devices via communication channel 560. The communication interface 56 may include, but is not limited to, a transceiver configured to transmit and to receive data over communication channel 560. The communication interface 56 may include, but is not limited to, a modem or network card and the communication channel 560 may be implemented, for example, within a wired and/or a wireless medium.

Data may be streamed to the system 5, in various embodiments, using a Wi-Fi network such as IEEE 802.11. The Wi-Fi signal of these embodiments may be received over the communications channel 560 and the communications interface 56 which are adapted for Wi-Fi communications. The communications channel 560 of these embodiments may be typically connected to an access point or router that provides access to outside networks including the Internet for allowing streaming applications and other over-the-top communications.

Other embodiments may provide streamed data to the system 5 using a set-top box or a computer that delivers the data over the HDMI connection of the input block 55.

Still other embodiments may provide streamed data to the system 5 using the RF connection of the input block 55.

The streamed data may be used as a way for signaling information used by the system 5. The signaling information may comprise the data encoded in a container such as a binary stream or a haptic effect file for example.

It is to be appreciated that signaling may be accomplished in a variety of ways. For example, one or more syntax elements, flags, and so forth may be used to signal information to a corresponding data processing device in various embodiments.

The system 5 may provide an output signal to various output devices, including a display 570, speakers 580, and other peripheral devices 590 like haptic devices/actuators.

In various embodiments, control signals may be communicated between the system 5 and the display 570, speakers 580, or other peripheral devices 590 using signaling such as AV.Link (Audio/Video Link), CEC (Consumer Electronics Control), Audio protocols, USB (Universal Serial Bus), HIF UHP (Haptics Industry Forum - Universal Haptic Protocol) or other communications protocols that enable device-to-device control with or without user intervention.

The output devices may be communicatively coupled to system 5 via dedicated connections through respective interfaces 57, 58, and 59.

Alternatively, the output devices may be connected to system 5 using the communications channel 560 via the communications interface 56. The display 570, speakers 580 and/or haptic device(s) (actuators) 590 may be integrated in a single unit with the other components of system 5 in an electronic device such as, for example, a television.

In various embodiments, the display interface 57 may include a display driver, such as, for example, a timing controller (T Con) chip.

The display 570, speakers 580 and/or haptic device(s) (actuators) 590 may alternatively be separate from one or more of the other components. In various embodiments in which the display 570, speakers 580 and/or haptic device(s) (actuators) 590 may be external components, the output signal may be provided via dedicated output connections, including, for example, HDMI ports, USB ports, or COMP outputs.

In **Figures 1 to 5****,** various methods are described herein, and each of the methods includes one or more steps or actions for achieving the described method. Unless a specific order of steps or actions is required for proper operation of the method, the order and/or use of specific steps and/or actions may be modified or combined.

Some examples are described with regard to block diagrams and/or operational flowcharts. Each block represents a circuit element, module, or portion of code which includes one or more executable instructions for implementing the specified logical function(s). It should also be noted that in other implementations, the function(s) noted in the blocks may occur out of the indicated order. For example, two blocks shown in succession may, in fact, be executed substantially concurrently or the blocks may sometimes be executed in the reverse order, depending on the functionality involved.

The implementations and aspects described herein may be implemented in, for example, a method or a process, an apparatus, a computer program, a data stream, a bitstream, or a signal. Even if only discussed in the context of a single form of implementation (for example, discussed only as a method), the implementation of features discussed may also be implemented in other forms (for example, an apparatus or computer program).

The methods may be implemented in, for example, a processor, which refers to processing devices in general, including, for example, a computer, a microprocessor, an integrated circuit, or a programmable logic device. Processors also include communication devices.

Additionally, the methods may be implemented by instructions being performed by a processor, and such instructions (and/or data values produced by an implementation) may be stored on a computer readable storage medium. A computer readable storage medium may take the form of a computer readable program product embodied in one or more computer readable medium(s) and having computer readable program code embodied thereon that is executable by a computer. A computer readable storage medium as used herein may be considered a non-transitory storage medium given the inherent capability to store the information therein as well as the inherent capability to provide retrieval of the information therefrom. A computer readable storage medium may be, for example, but is not limited to, an electronic, magnetic, optical, electromagnetic, infrared, or semiconductor system, apparatus, or device, or any suitable combination of the foregoing. It is to be appreciated that the following, while providing more specific examples of computer readable storage mediums to which the present embodiments may be applied, is merely an illustrative and not an exhaustive listing as is readily appreciated by one of ordinary skill in the art: a portable computer diskette; a hard disk; a read-only memory (ROM); an erasable programmable read-only memory (EPROM or Flash memory); a portable compact disc read-only memory (CD-ROM); an optical storage device; a magnetic storage device; or any suitable combination of the foregoing.

The instructions may form an application program tangibly embodied on a processor-readable medium.

Instructions may be, for example, in hardware, firmware, software, or a combination. Instructions may be found in, for example, an operating system, a separate application, or a combination of the two. A processor may be characterized, therefore, as, for example, both a device configured to carry out a process and a device that includes a processor-readable medium (such as a storage device) having instructions for carrying out a process. Further, a processor-readable medium may store, in addition to or in lieu of instructions, data values produced by an implementation.

An apparatus may be implemented in, for example, appropriate hardware, software, and firmware. Examples of such apparatus include personal computers, laptops, smartphones, tablet computers, digital multimedia set top boxes, digital television receivers, personal video recording systems, connected home appliances, head mounted display devices (HMD, see-through glasses), projectors (beamers), "caves" (system including multiple displays), servers, video and/or haptic encoders, video and/or haptic decoders, haptic engine, post-processors processing output from a video decoder, pre-processors providing input to a video encoder, web servers, set-top boxes, wireless connected wearable haptic devices, e.g., Bluetooth^{®} connected wearable haptic devices, game controller, mouse, mousepad, keyboard, palm rest, chairs, desk, XR headset, headphones, bracelet, head and/or lumbar support device or chair, and any other device for processing haptic data or signals representative of one or more haptic feedback or effect, or other communication devices. As should be clear, the equipment may be mobile.

Computer software may be implemented by the processor 51 or by hardware, or by a combination of hardware and software. As a non-limiting example, the embodiments may be also implemented by one or more integrated circuits. The memory 52 may be of any type appropriate to the technical environment and may be implemented using any appropriate data storage technology, such as optical memory devices, magnetic memory devices, semiconductor-based memory devices, fixed memory, and removable memory, as non-limiting examples. The processor 51 may be of any type appropriate to the technical environment, and may encompass one or more of microprocessors, general purpose computers, special purpose computers, and processors based on a multi-core architecture, as non-limiting examples.

As will be evident to one of ordinary skill in the art, implementations may produce a variety of signals formatted to carry information that may be, for example, stored or transmitted. The information may include, for example, instructions for performing a method, or data produced by one of the described implementations. For example, a signal may be formatted to carry the bitstream of a described embodiment. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.

The terminology used herein is for the purpose of describing particular embodiments only and is not intended to be limiting. As used herein, the singular forms "a", "an", and "the" may be intended to include the plural forms as well, unless the context clearly indicates otherwise. It will be further understood that the terms "includes/comprises" and/or "including/comprising" when used in this specification, may specify the presence of stated, for example, features, integers, steps, operations, elements, and/or components but do not preclude the presence or addition of one or more other features, integers, steps, operations, elements, components, and/or groups thereof. Moreover, when an element is referred to as being "responsive" or "connected" to another element, it may be directly responsive or connected to the other element, or intervening elements may be present. In contrast, when an element is referred to as being "directly responsive" or "directly connected" to other element, there are no intervening elements present.

It is to be appreciated that the use of any of the symbol/term "/", "and/or", and "at least one of", for example, in the cases of "A/B", "A and/or B" and "at least one of A and B", may be intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended, as is clear to one of ordinary skill in this and related arts, for as many items as are listed.

Various numeric values may be used in the present application. The specific values may be for example purposes and the aspects described are not limited to these specific values.

It will be understood that, although the terms first, second, etc. may be used herein to describe various elements, these elements are not limited by these terms. These terms are only used to distinguish one element from another. For example, a first element could be termed a second element, and, similarly, a second element could be termed a first element without departing from the teachings of this application. No ordering is implied between a first element and a second element.

Reference to "one exemplary embodiment" or "an exemplary embodiment" or "one implementation" or "an implementation", as well as other variations thereof, is frequently used to convey that a particular feature, structure, characteristic, and so forth (described in connection with the embodiment/implementation) is included in at least one embodiment/implementation. Thus, the appearances of the phrase "in one exemplary embodiment" or "in an exemplary embodiment" or "in one implementation" or "in an implementation", as well any other variations, appearing in various places throughout this application are not necessarily all referring to the same embodiment.

Similarly, reference herein to "in accordance with an exemplary embodiment / example / implementation" or "in an exemplary embodiment / example / implementation", as well as other variations thereof, is frequently used to convey that a particular feature, structure, or characteristic (described in connection with the exemplary embodiment / example / implementation) may be included in at least one exemplary embodiment / example / implementation. Thus, the appearances of the expression "in accordance with an exemplary embodiment / example / implementation" or "in an exemplary embodiment / example / implementation" in various places in the specification are not necessarily all referring to the same exemplary embodiment / example / implementation, nor are separate or alternative exemplary embodiment / examples / implementation necessarily mutually exclusive of other exemplary embodiments / examples / implementation.

Reference numerals appearing in the claims are by way of illustration only and shall have no limiting effect on the scope of the claims. Although not explicitly described, the present embodiments / examples and variants may be employed in any combination or sub-combination.

When a figure is presented as a flow diagram, it should be understood that it also provides a block diagram of a corresponding apparatus. Similarly, when a figure is presented as a block diagram, it should be understood that it also provides a flow diagram of a corresponding method/process.

Although some of the diagrams include arrows on communication paths to show a primary direction of communication, it is to be understood that communication may occur in the opposite direction to the depicted arrows.

Additionally, this application may refer to "obtaining" various pieces of information. Obtaining the information may include one or more of, for example, receiving the information, determining the information, estimating the information, calculating the information, or retrieving the information from memory.

Further, this application may refer to "accessing" various pieces of information. Accessing the information may include one or more of, for example, receiving the information, retrieving the information (for example, from memory), storing the information, moving the information, copying the information, calculating the information, determining the information, or estimating the information.

Additionally, this application may refer to "receiving" various pieces of information. Receiving is, as with "accessing", intended to be a broad term. Receiving the information may include one or more of, for example, accessing the information, or retrieving the information (for example, from memory). Further, "receiving" is typically involved, in one way or another, during operations such as, for example, storing the information, processing the information, transmitting the information, moving the information, copying the information, erasing the information, calculating the information, determining the information, or estimating the information.

A number of implementations have been described. Nevertheless, it will be understood that various modifications may be made. For example, elements of different implementations may be combined, supplemented, modified, or removed to produce other implementations. Additionally, one of ordinary skill will understand that other structures and processes may be substituted for those disclosed and the resulting implementations will perform at least substantially the same function(s), in at least substantially the same way(s), to achieve at least substantially the same result(s) as the implementations disclosed. Accordingly, these and other implementations are contemplated by this application.

## Claims

1. A method of generating a haptic effect, the method comprising:
- obtaining (41) classification information representative of a type of an audio content associated with an audio signal (201);
- selecting (42) a set of detection parameters (221) among a plurality of sets of detection parameters according to said classification information;
- detecting (43) at least a component of said audio signal (201) according to said selected set of detection parameters (221);
- determining (44) at least a characteristic (212) representative of said at least a component; and
- generating (45) said haptic effect according to said at least a characteristic (212).

2. The method according to claim 1, further comprising obtaining a set of user-preference parameters (231) representative of preference of a user, said haptic effect being further generated according to said set of user-preference parameters (231).

3. The method according to claim 2, further comprising:
- receiving mode information representative of a rendering mode for rendering said haptic effect;
- selecting said set of user-preference parameters (231) among a plurality of sets of user-preference parameters according to said mode information.

4. The method according to claim 2 or 3, wherein values of said detection parameters (221) of said selected set are according to said set of user-preference parameters (231).

5. The method according to any one of claims 1 to 4, wherein said at least a component belongs to a set of components comprising:
- a component corresponding to a transient in a temporal representation of said audio signal (201); and
- a component corresponding to a frequency sub-band of a frequency band associated with a frequency representation of said audio signal (201).

6. The method according to claim 5, wherein said frequency representation is obtained by applying a Fast Fourier Transform to said temporal representation of said audio signal (201).

7. The method according to any one of claims 1 to 6, wherein said set of detection parameters (221) comprises at least a parameter belonging to a set of parameters comprising:
- a parameter representative of a determined amplitude;
- a parameter representative of a time window;
- parameters representative of bounds of a frequency interval;
- a parameter representative of a frequency threshold; and
- a parameter representative of a spectral power threshold.

8. The method according to any one of claims 1 to 7, wherein said at least a characteristic (212) belongs to a set of characteristics comprising:
- a characteristic representative of an amplitude value;
- a characteristic representative of a frequency value;
- a characteristic representative of an amplitude power difference between 2 power spectral density representations of said audio signal.

9. The method according to one of claims 1 to 8, further comprising obtaining actuator information (232) representative of a type of haptic actuator targeted to render said haptic effect, said haptic effect being further generated according to said actuator information (232).

10. An apparatus (5) of generating a haptic effect, wherein said apparatus comprising a memory (52) associated with at least a processor (51) configured to implement the method according to any one of claims 1 to 9.

11. A non-transitory processor readable medium having stored therein instructions for causing a processor to perform at least the steps of the method according to one of claims 1 to 9.

12. A computer program product comprising instructions of program code for executing the method according to any one of claims 1 to 9, when said program is executed on a computer.
